# DEMANDE DE BREVET EUROPEEN

(11) **EP 2 515 066 A1**
(43) Date de publication de la demande: **24.10.2012**
(21) Numéro de dépôt: 12164966.9
(22) Date de dépôt: 20.04.2012
(51) Int. Cl.: F41G 7/24

(54) **Dispositif de guidage différentiel par imagerie active laser**

(30) Priorité: 21.04.2011 FR 1101254
(71) Demandeur: Thales, 92200 Neuilly Sur Seine (FR)
(72) Inventeur: SAUTY, Eric, 75012 PARIS (FR); PERES, Alain, 92260 FONTENAY AUX ROSES (FR)
(74) Mandataire: Lucas, Laurent Jacques

(57) **Abrégé**

L'invention concerne un dispositif permettant de réaliser le guidage d'un vecteur d'interception vers une cible détectée par des moyens de détections auxquels le dispositif est couplé moyens qui lui désignent la cible à intercepter. Le dispositif de guidage comporte un imageur laser et un écartomètre double capable de réaliser une écartométrie différentielle entre la cible désignée par les moyens de détection et le vecteur d'interception dirigé vers la cible. Selon la configuration considérée, le dispositif selon l'invention détermine par lui-même les distances de la cible et du vecteur, ou est associé à des moyens de télémétrie appropriés qui déterminent ces distances. Selon la configuration considérée également, il réalise lui-même la télécommande du vecteur d'interception ou il transfert les mesures d'écartométries réalisées à des moyens appropriés qui élaborent et transmettent des commandes de navigation au vecteur d'interception. Selon la configuration considérée également, il peut réaliser le guidage de plusieurs vecteurs d'interception sur des cibles désignées distinctes.

## Description

L'invention se situe dans le domaine des systèmes de guidage de vecteurs d'interception, de type missile, roquette ou obus par exemple, destinés à neutraliser des cibles désignées.

L'invention vise à assurer le guidage de précision de vecteurs bon marché, courte portée, à faible rayon létal, d'un rayon typiquement inférieur ou égal à 3 m, ou nécessitant l'impact sur la cible ou sur une partie vulnérable de la cible, dans un domaine s'étendant jusqu'au domaine de courte portée de la défense sol-air (soit 6-10 km), sans sophistication excessive du poste de tir. On entend par rayon létal le rayon définissant la zone de l'espace (sphère) dans laquelle l'action du vecteur est fortement préjudiciable à tout objet ou individu situé dans cette zone.

En l'état actuel de l'art, la précision du guidage d'un vecteur est assurée en mettant en oeuvre soit un système autodirecteur, soit un système de guidage sur faisceau (beamriding selon la dénomination anglo-saxonne) (pas de senseur sur le vecteur), soit un système de guidage différentiel passif infrarouge ou radar, soit encore par un système de guidage basé sur une localisation croisée entre deux senseurs.

Les solutions à autodirecteurs présentent l'inconvénient d'être d'un coût élevé, coût qui, par suite, rend le vecteur considéré trop onéreux vis-à-vis du coût de certaines menaces asymétriques auxquelles ils sont censés répondre. On entend ici par menace asymétrique, une menace, un engin, dont le coût est jugé particulièrement faible si l'on considère le dégât qu'elle peut occasionner et le prix des moyens à mettre en oeuvre pour s'en prémunir.

L'utilisation de solutions de guidage de type "beamriding" présente l'inconvénient de se traduire par la mise en place d'un tunnel (un couloir) de guidage centré sur la cible ou décalé par rapport à celle-ci d'un angle déterminé. Un tel guidage se traduit par la mise en oeuvre d'un asservissement étroit (i.e. avec une faible tolérance) de l'axe de guidage du vecteur, ou l'ensemble constitué par la ligne de visée et l'axe de guidage, sur la position de la cible. Il implique également la réalisation et le maintien d'une harmonisation fine, d'un parallélisme étroit, entre la ligne de visée et l'axe de guidage. Ces deux contraintes sont généralement satisfaites au prix d'une sophistication importante du poste de tir (dispositif de stabilisation) et par mise à disposition d'un kit de maintenance préventive (i.e. un outillage et la procédure associée) permettant de contrôler cette harmonisation lorsque elle est susceptible d'avoir été dégradée (fort écart de température, vibrations et chocs dus au déplacement,...) et de la restaurer lorsqu'une dégradation est constatée.

Les solutions à guidage différentiel passif infrarouge réalisent la télécommande du vecteur (liaison montante de type hyperfréquence, laser, filaire,..) et localisent sa position angulaire au moyen de la caméra infrarouge servant par ailleurs à poursuivre la cible. Cependant, avec des vecteurs bon marché, de petit calibre, cette localisation n'est pas aisée, le vecteur présentant une faible signature infrarouge. Il faut alors augmenter l'émission propre du vecteur par intégration d'un émetteur actif (source de lumière pyrotechnique ou électronique), comme par exemple dans la demande de brevet EP 1 925 902, ce qui a pour conséquence de complexifier la structure du vecteur et par là même d'augmenter son prix de revient. Par ailleurs, la précision de guidage différentiel passif infrarouge est généralement déduite de la résolution des caméras utilisées, laquelle est liée à la diffraction. Par suite, plus l'exigence de précision est élevée plus le diamètre des optiques mises en oeuvre pour réaliser le guidage doit être grand et ce, d'autant plus que la longueur d'onde est plus grande. Cette exigence contraint ainsi à mettre en oeuvre des optiques spécifiques (optiques très petit champ) ce qui augmente également le coût du poste de tir.

Les solutions à guidage différentiel radar réalisent la télécommande du vecteur (liaison montante de type hyperfréquence) et nécessitent à la fois la mise en oeuvre d'un radar de poursuite cible comportant un dispositif intégré de localisation du vecteur et la mise en place sur le vecteur d'un émetteur dont le signal est localisable par le radar. De telles solutions, qui nécessitent la mise en oeuvre de senseurs et de composants spécifiques et onéreux à la fois sur le poste de tir et sur le vecteur, sont en général adoptées seulement pour des systèmes haut de gamme, en particulier des systèmes dont les performances sont peu affectées par les conditions atmosphériques. Elles ne constituent donc pas une solution appropriée pour les vecteurs bon marché.

Les solutions croisées, quant à elles, réalisent la télécommande du vecteur (liaison montante de type hyperfréquence, laser, filaire,..) et la localisation de la cible et du vecteur avec deux senseurs différents. Ce sont des solutions qui, dans leur ensemble, nécessitent le maintien entre les deux senseurs d'une harmonisation suffisante pour assurer la précision de guidage. Par ailleurs, en règle générale, ces solutions ne répondent pas à l'exigence d'un guidage de grande précision angulaire dans l'erreur d'harmonisation se retrouve directement sur la précision de guidage.

Un but de l'invention est de proposer une solution efficace et peu onéreuse, par rapport aux solutions existantes, au problème évoqué précédemment.

A cet effet l'invention a pour objet un dispositif de guidage différentiel, par imagerie active laser, pour guider un vecteur d'interception vers une cible détectée et désignée par un senseur principal auquel il est couplé, ledit dispositif étant par ailleurs mécaniquement couplé à des moyens de positionnement permettant d'orienter son axe de visée dans deux axes, horizontal et vertical. Le dispositif selon l'invention comporte principalement un imageur actif laser, émettant un signal laser de localisation, associé à un écartomètre double configuré pour permettre de localiser simultanément la cible désignée et le vecteur d'interception et pour déterminer l'écartométrie angulaire différentielle θ entre la direction correspondant à la cible et la direction correspondant au vecteur d'interception. Le pointage du dispositif dans la direction de la cible est ici réalisé par les moyens de positionnement auxquels il est couplé.

Selon un mode de réalisation particulier, le dispositif selon l'invention comporte en outre un dispositif optique amplificateur, monté sur le vecteur d'interception et configuré pour permettre d'amplifier l'écho laser réfléchi par celui-ci.

Selon un autre mode de réalisation particulier, le dispositif selon l'invention comporte en outre un télémètre laser permettant de déterminer les distances respectives de la cible (D_{cible}) et du vecteur d'interception (D_{vecteur}), la direction pointée par le télémètre étant déterminée par l'écartomètre double; les distances de la cible et du vecteur d'interception étant transmises à des moyens chargés du guidage du vecteur d'interception vers la cible.

Selon un mode de réalisation particulier du dispositif selon l'invention, l'imageur actif est configuré de façon à réaliser, entre deux émissions consécutives, l'acquisition de plusieurs images successives décalées dans le temps, les instants d'acquisition et la durée de chaque acquisition permettant de définir des fenêtres d'acquisition espacées les uns des autres, la distance correspondant à une image donnée étant fonction de l'intervalle de temps séparant l'instant d'ouverture de la fenêtre temporelle durant laquelle l'image a été capturée de l'instant d'émission.

Selon une variante du mode de réalisation particulier précédent, l'écartomètre double est configuré de façon à transmettre à des moyens chargés du guidage du vecteur d'interception vers la cible à la fois l'écartométrie différentielle vecteur-cible et la distance correspondant à la fenêtre temporelle à partir de laquelle l'écartométrie différentielle transmise à été calculée.

Selon un mode de réalisation particulier, le dispositif selon l'invention, comporte en outre des moyens de guidage annexes configurés pour prendre en compte les informations d'azimut, de site et de distance de la cible désignée, fournies par le système de détection, et réaliser le guidage du vecteur d'interception sur la cible durant la phase de vol pendant laquelle il est situé hors du champ de l'imageur.

Selon un mode de réalisation particulier, le dispositif selon l'invention est configuré pour réalisé une interception multicibles. Il comporte à cet effet plusieurs moyens de guidage annexes chacun étant configuré de façon à assurer le guidage d'un vecteur d'interception sur une cible donnée. Le dispositif selon l'invention est en outre agencé de façon à pouvoir être orienté successivement vers chacune des cibles désignées et mis en oeuvre de façon à assurer simplement le guidage final du vecteur correspondant sur la cible considérée.

Selon un mode de réalisation particulier, le dispositif selon l'invention comporte en outre des moyens associés à l'imageur permettant un guidage optique direct du vecteur d'interception par le dispositif.

Selon une variante du mode de réalisation particulier précédent, les moyens de guidage optique sont des moyens de télécommande par faisceau laser qui comportent une source laser intégré à l'imageur actif, dont le faisceau couvre le champ de l'imageur actif et configurée de façon à ce que les divergences du faisceau laser d'illumination de l'imageur actif et du faisceau laser de télécommande soient identiques ou proches.

Selon une variante du mode de réalisation particulier précédent l'imageur laser ne comporte qu'une seule source d'émission. celle-ci est utilisée à la fois pour réaliser l'émission du signal servant à illuminer la zone imagée par le dispositif et pour réaliser l'émission du faisceau de télécommande du vecteur d'interception, l'émission du signal d'illumination et celle du signal de télécommande étant alternées dans le temps.

Selon une réalisation particulière de la variante du mode de réalisation particulier précédent, l'imageur étant par ailleurs équipé d'un émetteur laser agile en longueur d'onde, l'émission des ordres de télécommande est réalisée sur une longueur d'onde différente de celle de l'émission du signal de localisation.

Les caractéristiques et avantages de l'invention seront mieux appréciés grâce à la description qui suit, description qui s'appuie sur les figures annexées qui représentent:
- les figures 1 et 2, des synoptiques présentant la structure du dispositif selon l'invention, dans sa forme générale ;
- la figure 3, un schéma illustrant une première manière de réaliser la mesure des distances cible et vecteur au moyen du dispositif selon l'invention ;

- la figure 4, un schéma illustrant une deuxième manière de réaliser la mesure des distances cible et missile au moyen du dispositif selon l'invention ;
- la figure 5, un schéma illustrant une première variante de réalisation du dispositif selon l'invention dans laquelle celui-ci comporte un télémètre laser ;
- la figure 6, un schéma illustrant une deuxième variante de réalisation du dispositif selon l'invention dans laquelle celui-ci est configuré pour réaliser par lui-même les mesures des distances cible et vecteur ;
- les figures 7 et 8, les illustrations de deux variantes de réalisation du dispositif selon l'invention dans lesquelles celui-ci est configuré pour réaliser la télécommande du vecteur ;
- la figure 9, une illustration relative à une application du dispositif selon l'invention permettant de réaliser une mesure de distance cible de grande précision en faisant coopérer plusieurs dispositifs.

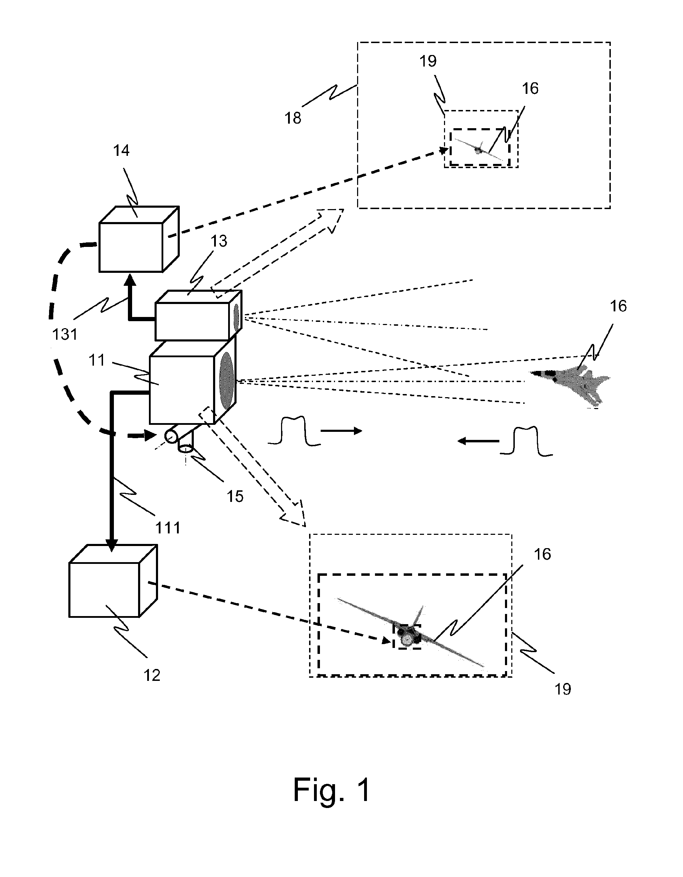

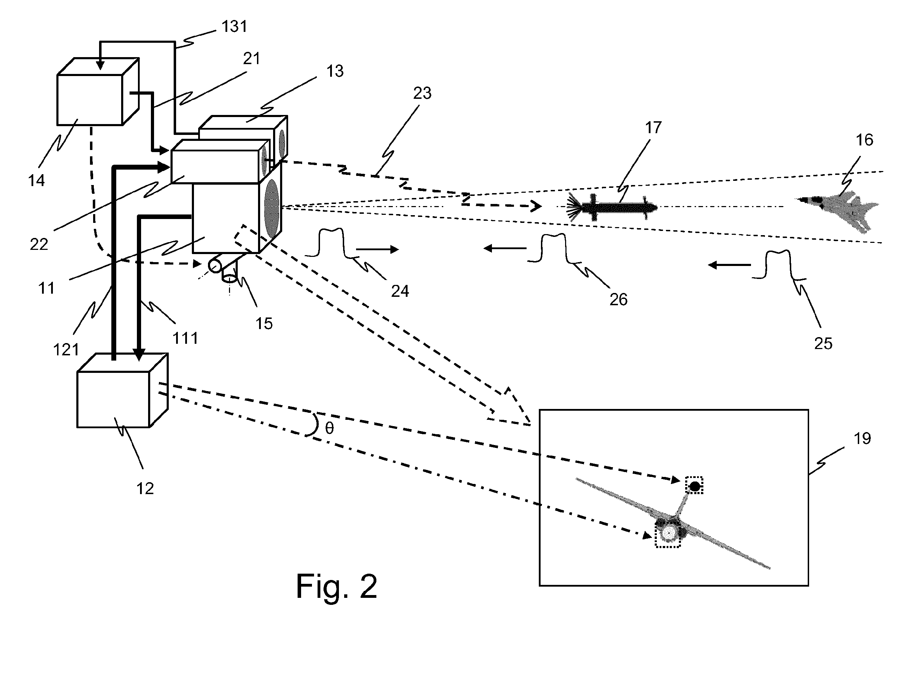

La solution apportée consiste, comme illustré schématiquement par les figures 1 et 2 notamment, en un dispositif destiné à être associé à une senseur principal, ce senseur principal pouvant par exemple consister en un senseur intégré à une conduite de tir standard ou encore en un senseur de surveillance et de poursuite éventuellement déporté.

Une conduite de tir standard est elle-même constituée, de manière classique, d'un senseur principal comportant des moyens de détection 13, par exemple une caméra optique ou infrarouge ou encore radar de poursuite, et des moyens de positionnement 15 permettant d'orienter l'axe de visée du senseur dans deux axes, horizontal et vertical. Le pointage initial de la conduite de tir vers une cible s'effectue d'après une désignation d'objectif externe (par exemple un radar de surveillance, une veille optronique, un guetteur à vue,...).

Un senseur de surveillance et de poursuite (par exemple un radar multifonctions ou une surveillance optronique rapide) est un senseur permettant successivement de détecter des cibles dans un domaine angulaire important (par exemple 360°en gisement et de 10°à 40°en site) puis d'en effectuer la poursuite, c'est à dire de localiser précisément la cible (par exemple à quelques milliradians près) et à cadence suffisamment élevée (par exemple de 10 à 40Hz). Cette précision et cette cadence de rafraîchissement permettent d'orienter directement des moyens de positionnement "deux axes" (horizontal et vertical) vers la cible, ces moyens étant eux-mêmes couplés avec le dispositif selon l'invention.

Le dispositif selon l'invention consiste principalement en un imageur actif laser 11 associé à un écartomètre double 12. Cet écartomètre est configuré pour permettre de localiser simultanément la cible 16 et le vecteur 17 et, plus précisément, pour déterminer l'écartométrie angulaire différentielle θ entre la cible 16 et le vecteur 17 chargé de l'intercepter. Le dispositif selon l'invention permet ainsi le guidage du vecteur 17 sur la cible 16 avec une grande précision sans sophistication excessive de la conduite de tir ou du vecteur.

Comme l'illustre la figure 2, l'écartométrie différentielle θ, 121, entre la cible 16 et le vecteur 17 ainsi déterminée est destinée à être associée aux mesures 21 des distances cible et vecteur, obtenues par ailleurs, pour élaborer, à l'aide de moyens 22 des ordres de télécommande permettant de guider le vecteur 17 sur la cible 16 ou sur une partie vulnérable de la cible. Ces ordres de télécommande peuvent quant à eux être transmis au vecteur par une liaison montante classique, de type hyperfréquence ou laser, symbolisée par la flèche en ligne brisée 23 sur la figure.

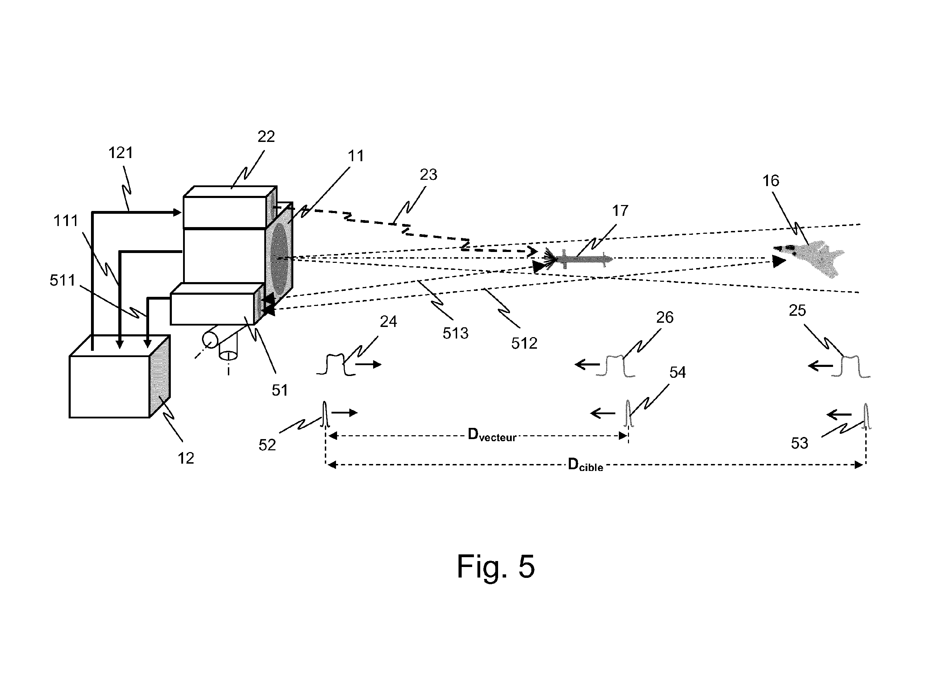

Selon l'application considérée les distances cible et vecteur d'interception sont mesurées de différentes façons, directement à l'aide des moyens constituant le senseur principal, un radar de poursuite ou un radar de surveillance et de poursuite par exemple, ou encore par un senseur supplémentaire, un télémètre laser 51 par exemple, comme illustré par la figure 5 présentée dans la suite du document.

Selon un mode de réalisation particulier le dispositif selon l'invention peut également comporter un dispositif optique passif destiné à être monté sur le vecteur 17 et permettant l'amplification des échos laser réfléchis par le vecteur.

Ainsi, dans le cas d'une conduite de tir standard, une séquence de tir typique met en oeuvre les différents moyens qui coopèrent avec le dispositif selon l'invention selon le principe suivant:
- l'acquisition et la poursuite grossière de la cible sont effectuées par le senseur principal de poursuite 13-15, par exemple un radar ou une caméra 13, monté sur un dispositif de pointage mécanique 15 par exemple une tourelle ou un viseur.
- les moyens de traitement 14 du senseur principal traitent le signal 131 issu du capteur 13, une image vidéo 18 par exemple, pour déterminer la position angulaire de la cible à partir de l'écho réfléchi par celle-ci et ainsi initier puis entretenir une boucle de poursuite angulaire couplée au dispositif de pointage 15.

Dans le cas d'une association avec un senseur de surveillance et de poursuite, le dispositif de pointage 15 est pointé directement grâce aux mesures du senseur.
- puis, dans le cas d'une conduite de tir standard comme dans le cas d'une association avec un senseur de surveillance, dès que la cible 16 entre dans le champ de l'imageur actif 11 du dispositif selon l'invention, une poursuite angulaire fine de la cible 16 ou d'une partie choisie de la cible est engagée par celui-ci. A cet effet, l'image 19 de la cible, obtenue par l'imageur actif 11, est traitée par l'écartomètre 12 du dispositif selon l'invention. Le signal 111, correspondant à l'image 19 traitée par l'écartomètre, est formé à partir de l'écho 26 du signal laser 24 émis par l'imageur 11 et réfléchi par la cible 16, conformément au principe de fonctionnement d'un imageur actif laser.

Ensuite, si une décision de tir, est prise, un vecteur d'interception est envoyé vers la cible et les phases de guidage suivantes sont mises en oeuvre:
- une première phase, phase initiale, de guidage du vecteur 17 (missile,...) vers la zone située dans le champ de l'imageur actif laser 11 est assurée par le dispositif de guidage associé au senseur principal, et formant le système de conduite de tir. Ce dispositif peut être, par exemple, un dispositif de télécommande 22, couplé au système de télémesure du senseur principal, transmettant des ordres de navigation 23 au vecteur 17 comme illustré sur la figure 2 ou peut encore être constitué par un dispositif annexe couplé au senseur, un système de guidage laser (ou beamriding selon la dénomination anglo-saxonne) sur lequel le vecteur cale automatiquement sa trajectoire.
- une deuxième phase, qui débute lorsque le vecteur 17 entre dans le champ de l'imageur actif 11 et durant laquelle l'écartomètre 12 effectue l'acquisition et la poursuite du vecteur 17. Le vecteur est localisé grâce à son écho 26 qui peut être, comme mentionné précédemment amplifié par un dispositif un amplificateur d'écho passif, par exemple un rétro-réflecteur.
- une dernière phase durant laquelle la poursuite de la cible 16 et le guidage du vecteur 17 vers la cible sont directement gérés par le dispositif selon l'invention. Le guidage du vecteur 17 vers la cible 16 est réalisé en mesurant l'écartométrie différentielle vecteur-cible, θ, et en envoyant au vecteur 17 des ordres de navigation en utilisant par exemple les moyens de télécommande 22, de type hyperfréquence ou laser, associés au système de tir, jusqu'à l'interception. Ces ordres de télécommande sont élaborés en utilisant, en particulier, les positions angulaires relatives de la cible 16 ou d'une zone particulière de la cible et du vecteur 17, déterminées par l'écartomètre 12 traitant l'image 19 produite par l'imageur actif laser 11. Alternativement, le guidage du vecteur sur la cible peut être réalisé en mettant en oeuvre un dispositif annexe de guidage laser (Beamriding) piloté par le dispositif selon l'invention.

Avantageusement, le dispositif selon l'invention permet ainsi un guidage très précis d'un vecteur d'interception 17 sur une cible 16, sans nécessiter de modifications substantielles du système de protection (senseur principal et conduite de tir) auxquels il est associé, ni sur le vecteur d'interception 17 mis en oeuvre par ce système. L'adjonction du dispositif selon l'invention à un tel système permet donc, de manière simple et pour un faible coût, d'accroitre sensiblement la précision de guidage du vecteur 17 vers sa cible 16.

Ainsi, par exemple, un imageur actif laser dont le champ couvre 5 milliradians et ayant un capteur de 500 points de résolution permet d'obtenir une précision théorique d'écartométrie angulaire différentielle θ de 10 microradians. Si l'on suppose la qualité de l'optique limitée par la diffraction et une illumination laser à 1,5 micron, le diamètre de l'optique serait d'environ 200 millimètres, ce qui ne constitue pas une difficulté majeure d'intégration.

Par ailleurs les imageurs actifs laser étant des senseurs de plus en plus employés pour différentes applications comme l'identification à distance (surveillance maritime, de frontière,...), les technologies associées à l'imagerie active laser (laser solides, capteurs d'imagerie InAsGa) sont en plein développement. Par suite, par effet de masse, le coût de tels imageurs est en baisse constante.

De manière avantageuse également, le guidage réalisé étant ici un guidage différentiel, une stabilisation fine de la ligne de visée du système n'est pas nécessaire pour obtenir une grande précision de guidage. Il suffit seulement que la cible 16 et le vecteur 17 restent dans le champ de l'imageur actif 11. Une stabilisation électronique est cependant envisageable pour garantir un confort de visualisation pour un opérateur éventuel désireux de visualiser les images captées.

Il est à noter par ailleurs que, la grande résolution de l'imageur actif 11 permettant un guidage précis du vecteur 17, le dispositif selon l'invention est particulièrement bien adapté au guidage de vecteurs 17 bon marché, à faible rayon létal, voire au guidage de vecteurs dont l'efficacité nécessite l'impact avec la cible 11. La possibilité d'atteindre un point de grande vulnérabilité de la cible 16 de façon à augmenter l'efficacité du tir, permet ainsi d'utiliser des vecteurs 17 emportant des charges plus faibles et, par voie de conséquence, de minimiser les dégâts collatéraux pouvant être occasionnés dans la zone d'interception.

Comme il a été dit précédemment, le guidage peut en outre être facilité par la mise en place d'un rétro-réflecteur (coin de cube ou autre) sur le vecteur 17, afin d'amplifier le signal réfléchi par ce dernier. Dans la mesure où II existe par ailleurs des solutions simples permettant de faire assurer cette fonction de réflecteur par un des équipements montés sur le vecteur, avec un récepteur de télécommande hyperfréquence ou laser par exemple, cet ajout permet de faciliter la localisation du vecteur sans occasionner un accroissement sensible du coût de ce vecteur.

L'utilisation du dispositif selon l'invention est ainsi avantageusement économique en termes de mise en oeuvre.

Il est à noter que, outre qu'il permet de réaliser la fonction de mesure angulaire pour laquelle il est normalement mis en oeuvre, le dispositif selon l'invention, peut dans certains modes de réalisation particuliers être configuré pour effecteur des mesures des distances cible et vecteur. En effet, le capteur de l'imageur actif laser 11 du dispositif dispose généralement d'une commande de sensibilisation et de désensibilisation dont le temps de commutation très bref permet de rendre l'imageur sensible seulement durant une ou plusieurs fenêtres temporelles successives espacées dans le temps depuis l'instant démission du signal de localisation 24. Chaque fenêtre temporelle correspond à un intervalle en distance dont la position est fonction de la vitesse de propagation de l'onde émise. Ainsi, par exemple, une fenêtre temporelle de 500ns correspond en termes de propagation à un intervalle de distance de 150m.

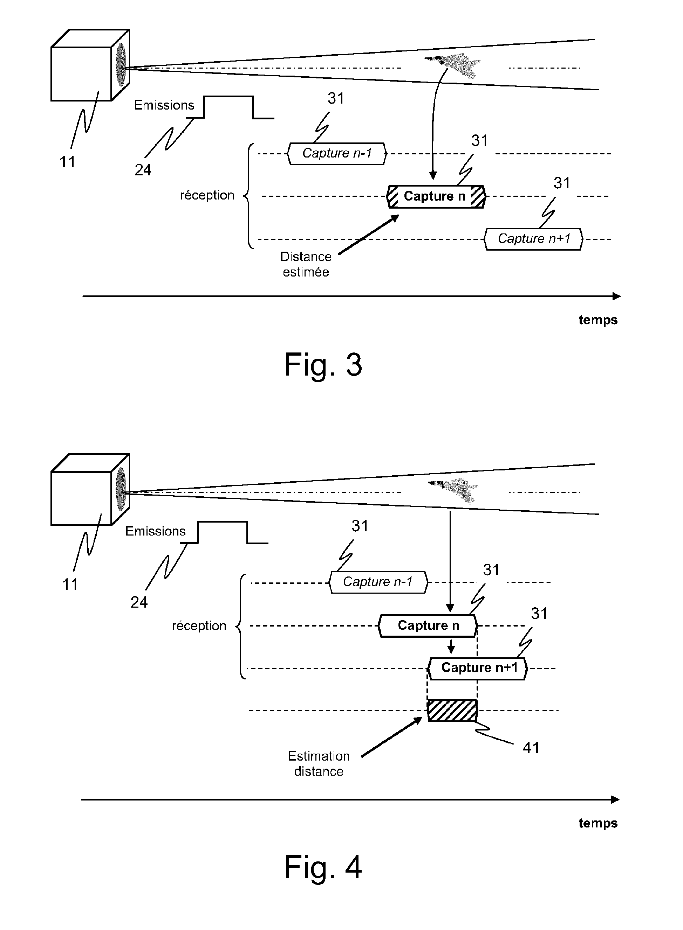

Comme l'illustre la figure 3, une recherche en distance peut ainsi être effectuée en considérant une série d'images actives obtenues en réalisant le décalage d'une fenêtre d'analyse (fenêtre temporelle) 31, d'une capture d'image à l'autre. Le procédé de mesure de distance consiste alors à décaler dans le temps, à chaque émission du signal de localisation 24, la fenêtre temporelle de réception et à tester pour chaque image capturée la présence de l'objet, cible ou vecteur, dans l'image considérée. Par suite lorsque l'objet considéré est détecté sur une image, la position de la fenêtre correspondant à cette image (la position du centre de l'image par exemple) est attribuée à l'objet. La précision de la mesure en distance obtenue est alors sensiblement égale à la largeur de la fenêtre 31.

Cette précision peut cependant être améliorée, comme l'illustre la figure 4, en réalisant un suréchantillonnage temporel. Ainsi, par exemple, si la fenêtre 31 n'est décalée, à chaque impulsion laser, que d'une fraction de sa largeur temporelle (i.e. de sa durée), de la moitié de sa largeur par exemple, comme l'illustre le chronogramme de la figure 4, le domaine d'incertitude 41 de la mesure est alors réduit et la précision de cette même mesure accrue (multipliée par 2 dans l'exemple de la figure 4).

Il est à noter que la recherche en distance ainsi réalisée peut, bien entendu, être accélérée en ne faisant pas une simple exploration systématique par décalages successifs de l'instant de capture. A cet effet, on peut mettre en oeuvre différents procédés bien connus, recherche par dichotomie notamment, ou encore recherche par applications successives de différents fenêtres temporels de tailles différentes, agencées selon un code Gray par exemple.

Ainsi, suivant les capacités de commutation de l'imageur actif laser 11 utilisé, et le type de fenêtrage que peuvent mettre en oeuvre les moyens de traitement 12 qui lui sont associés, la précision obtenue sur la mesure de distance réalisée par le dispositif selon l'invention peut être suffisante pour fournir les distances cible et vecteur nécessaires au guidage. Dans une telle configuration, le dispositif selon l'invention est en mesure d'assurer à lui seul à la fois les poursuites angulaires cible et vecteur et le guidage du vecteur 17 sur la cible 16. Le recours à un autre moyen de télémétrie; le télémètre du système si celui-ci en comporte un, ou l'ajout d'un télémètre de type télémètre laser par exemple, n'est ainsi pas nécessaire.

Il est à noter que, l'utilisation de fenêtres temporelles de capture d'image (i.e. de fenêtres d'écoute) permet avantageusement d'améliorer le contraste de l'image de la cible, d'une part en la détachant du bruit de fond (en procédant à la désensibilisation du capteur après le retour de l'écho cible) et d'autre part en s'affranchissant de la diffusion atmosphérique du signal émis 24 sur les éventuelles brumes ou fumées (en procédant à la désensibilisation du capteur avant le retour de l'écho cible). Ces techniques de fenêtrage bien connues sont couramment utilisées pour leurs effets d'accroissement de la sensibilité. Le fenêtrage temporel peut en outre être utilisé pour réaliser une capture sélective dans une fenêtre améliorer la localisation du vecteur 17 en plaçant son écho dans une fenêtre temporelle centrée sur un instant correspondant à une distance estimée par simulation temps réel du trajet du vecteur.

Il est également à noter qu'à l'instar des fonctions d'identification et de reconnaissance, la très grande résolution l'imageur laser actif permet avantageusement de mettre en oeuvre le dispositif selon l'invention, au delà de l'opération de guidage du vecteur 17 sur la cible16 , pour évaluer de façon très précise le degré de réussite de l'interception réalisée et de l'évolution possible de la cible 16 après interception (Confirmation du but atteint, état des dommages). Au besoin, une intégration et un recalage sur plusieurs images successives permet l'amélioration de la qualité de l'image visualisée.

Il est encore à noter que l'émetteur laser et le capteur constituant l'imageur actif laser 11 sont généralement capables de fonctionner, sur l'ensemble du champ couvert par l'imageur, à des cadences de rafraichissement largement supérieures à la cadence vidéo, une cadence de quelques centaines d'Hertz par exemple. Cependant, la fréquence de rafraichissement de l'image 19 est généralement limitée par le débit de sortie (en pixels/s) du capteur. Néanmoins, certains imageurs sont équipés de capteurs pouvant être configurés de façon à ne transmettre, sur commande, que certaines zones d'intérêt de l'image globale. Par suite, si on définit comme zones d'intérêt les zones de l'image 19 contenant la cible 16 et le vecteur 17, la cadence de transmission peut être sensiblement augmentée. On obtient alors une cadence de rafraîchissement beaucoup plus élevée, par exemple quelques milliers de Hertz.

Ainsi, avec un imageur laser comportant un capteur offrant ces possibilités et un traitement d'image adéquats, le dispositif selon l'invention peut être configuré pour présenter une très grande bande passante de poursuite et de guidage permettant l'interception de cibles particulières, des cibles rapides ou des cibles manoeuvrantes par exemple. On rappelle ici qu'une cible manoeuvrante est une cible qui effectue des évolutions avec des accélérations latérales importantes (i.e. des virages serrés, en langage courant) dans le but d'échapper à la défense, ou de rendre plus difficile l'interception par un vecteur de défense.

La durée du fonctionnement en haute cadence peut être par ailleurs limitée à une phase déterminée de l'interception de la cible 16, la fin de l'interception par exemple. De la sorte on dispose d'un dispositif polyvalent, capable à la fois de couvrir tout le champ imagé avec une cadence standard de rafraichissement de l'image captée 19 ou de couvrir un champ plus restreint avec une très haute cadence de rafraîchissement de l'image captée 19.

Pour répondre notamment à certaines applications particulières, le dispositif selon l'invention peut adopter des formes de réalisation particulières. Dans la suite du texte on présente certaines de ces formes de réalisation.

Ainsi, dans une première forme de réalisation, illustrée par la figure 5, le dispositif selon l'invention est complété par un télémètre laser. Selon l'invention, ce télémètre est configuré pour fournir les informations de distances cible et vecteur avec une précision et une cadence suffisante pour élaborer des données cinématiques précises, permettant notamment le guidage fin du vecteur 17 sur la cible 16 même en cas de manoeuvres ou de fort défilement de celle-ci, une cible défilante étant définie comme une cible se déplacement dans une direction sensiblement perpendiculaire à l'axe de visée de l'imageur (déplacement latéral par opposition à un déplacement radial). En cas de manoeuvres et de défilement importants, en effet, la détermination de la cinématique cible et par conséquence le guidage du vecteur nécessitent des mesures de distance cible de plus grande précision que ce que permet d'obtenir le dispositif.

Comme l'illustre le schéma synoptique de la figure 5, l'adjonction d'un télémètre laser 51 au dispositif selon l'invention permet avantageusement d'envisager une configuration de fonctionnement pour laquelle le senseur principal de poursuite auquel est associé le dispositif selon l'invention permet d'élaborer les consignes permettant la poursuite de la cible à l'aide d'un dispositif de pointage grossier.

Dans cette configuration, l'imageur laser actif 11 émet une illumination laser 24, une onde lumineuse, permettant de générer une image de la cible 16 et du vecteur 17. Le télémètre laser 51 émet quant à lui des impulsions laser 52 permettant de mesurer les distances de la cible 16 et du vecteur 17, matérialisées par les doubles flèches pointillées 512 et 513, à partir des échos 53 et 54 réfléchis respectivement par la cible et par le vecteur. Les moyens 12 associés à l'imageur 11 sont ici configurés à la fois pour réaliser la mesure d'écartométrie différentielle entre la cible 16 et le vecteur 17 et intégrer les informations de distance 511 délivrées par le télémètre de façon à produire des informations de guidage du vecteur 17 qui sont transmises au vecteur 17 par l'émetteur de télécommande 22.

Il est à noter que le télémètre laser 51 est initialement pointé sur la cible, de même que le dispositif d'imagerie actif laser selon l'invention, grâce au pointage grossier réalisé par le système auquel il est associé. A cet effet, lors de son intégration sur les moyens de pointage grossier, il fait l'objet d'une opération d'alignement sur le dispositif d'imagerie active laser selon l'invention.

Dans une deuxième forme de réalisation, le dispositif selon l'invention est associé à des moyens de guidage annexe bas coût gérés par le système de détection, 13-15, auquel le dispositif est associé, un système de guidage par faisceau laser de type "beamriding" par exemple. La fonction de ces moyens de guidage complémentaires est de réaliser le guidage du vecteur 17 sur la cible 16 durant la phase de vol pendant laquelle il est situé hors du champ de l'imageur 11. Le guidage est alors réalisé à partir des informations de distance, de site et d'azimut fournies par le senseur principal du système de détection, 13-15. Dans cette configuration, le dispositif selon l'invention n'est utilisé que pour la phase d'interception finale pour laquelle l'exigence de précision et de bande passante est la plus forte. Ce mode de réalisation permet l'obtention de trajectoires plus optimisées (cible défilante,...). Elle permet aussi de rendre le système capable de conduire des interceptions multicibles par la mise en oeuvre de plusieurs dispositifs de guidage annexes colocalisés et par la gestion séquentielle du dispositif selon l'invention pour réaliser des interceptions successives. Par ailleurs le dispositif selon l'invention ainsi mis en oeuvre permet avantageusement de rendre le guidage du vecteur indépendant, dans une large mesure, du senseur principal auquel il est destiné à être associé.

Dans une autre forme de réalisation, le dispositif selon l'invention est couplé à un senseur de surveillance précis, un radar multifonction par exemple ou à un système de veille optronique qui assure la fonction de détection et de poursuite de la cible et permet le pointage direct du dispositif. L'utilisation d'un senseur de poursuite grossière n'est alors plus nécessaire, dans la mesure où le dispositif de pointage grossier peut alors être asservi sur les mesures cibles (écartométries site et gisement, ou alors, écartométries site, gisement et distance) effectuées par le senseur de surveillance précis. La cible apparaîtra alors dans le champ du dispositif d'imagerie active laser selon l'invention sans qu'une phase d'acquisition intermédiaire par un senseur de poursuite soit nécessaire.

Il est à noter que les mesures d'écartométries absolues de la cible, c'est à dire l'écart angulaire entre la position de la cible et l'axe du dispositif d'imagerie actif laser, obtenues par l'écartomètre associé au dispositif d'imagerie active laser, peuvent être utilisées pour asservir le dispositif de pointage grossier de manière plus précise que celles permises par les écartométries du senseur de surveillance.

Il est par ailleurs à noter que, dans le cas de l'acquisition de la cible est assurée au préalable par un senseur de surveillance optronique, donc sans l'information distance, le rebouclage du pointage grossier sur les écartométries absolues de la cible permet avantageusement de pointer un télémètre laser harmonisé avec le dispositif d'imagerie active laser selon l'invention.

Dans une autre forme de réalisation encore, l'imageur actif 11 du dispositif selon l'invention comporte une source laser agile en longueur d'onde, ou pouvant émettre des signaux lumineux de localisation sur deux longueurs d'onde distinctes. Par ailleurs, le dispositif selon l'invention comporte ici un dispositif rétroréflecteur équipé d'un filtre interférentiel, coupe-bande, destiné à être monté sur le vecteur 17, dont le rôle est de bloquer la réflexion du signal porté par une des deux longueurs d'onde. L'écho du vecteur 17 peut ainsi être discriminé d'éventuels échos brouilleurs (contre-mesures) émis par la cible 16, la discrimination étant réalisée par comparaison entre les deux images réalisées avec deux éclairages chromatiques différents. L'utilisation d'un moyen actif (laser) peut en effet être détectée par la cible 16 pourvu qu'elle soit dotée d'un senseur d'alerte. Celle-ci peut alors mettre en oeuvre des moyens de contre-mesure, comme par exemple le jet de rétro-réflecteurs pouvant gêner la poursuite et donc le guidage du vecteur 17. Un tel brouillage est particulièrement efficace durant la phase finale, lorsque le fenêtrage temporel n'est plus discriminant entre la cible et le vecteur.

Dans une autre forme de réalisation encore, le dispositif selon l'invention comporte un récepteur/répondeur laser destiné à âtre monté sur le vecteur 17. Cette forme de réalisation, plus onéreuse que la précédente, permet avantageusement d'améliorer encore la résistance aux contre-mesures pouvant être mises en oeuvre par la cible 16. Elle permet en particulier de rendre possible une discrimination temporelle entre les échos de brouillage (contre-mesures) renvoyés par la cible 16 et l'écho du vecteur 17. Elle permet également la création d'une liaison descendante (liaison vecteur-système de guidage) utilisable pour mettre en oeuvre diverses autres fonctions, des fonctions de télémesure par exemple.

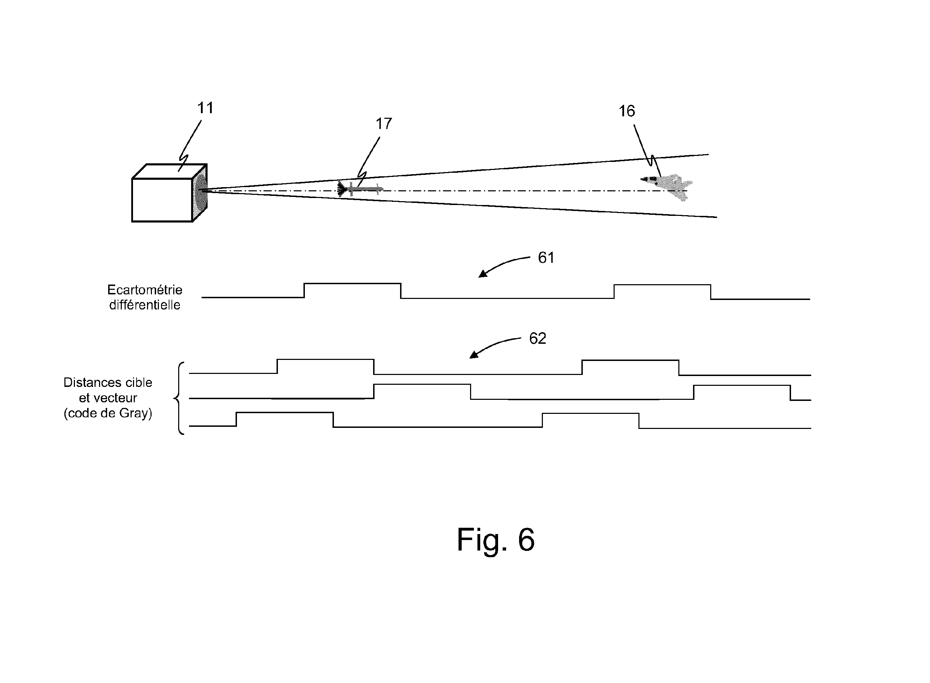

Dans une autre forme de réalisation, illustrée par la figure 6, le dispositif selon l'invention comporte un imageur 11 comportant lui-même un émetteur laser capable d'émettre des impulsions avec une grande cadence et un capteur configuré pour produire des images avec une haute cadence de production, comme décrit précédemment. Les moyens de traitement 12 associés à l'imageur 11 sont quant à eux configurés de façon à pouvoir mesurer à la fois l'écartométrie différentielle cible/vecteur, comme illustré par le chronogramme 61 et les distances respectives du vecteur 17 et de la cible 16, la recherche en distance étant par exemple réalisée, comme illustré par le chronogramme 62, par applications successives de différentes fenêtres temporelles de tailles différentes, agencées selon un code particulier.

La production d'images à haute cadence ainsi obtenue permet une actualisation des images suffisante pour alterner la détermination de l'écartométrie différentielle vecteur-cible (avec deux fenêtres temporelles centrées sur les distances du vecteur 17 et de la cible16), et la réalisation des tâches de recherche et de mesure des distances, sans altérer de manière sensible les performances de guidage.

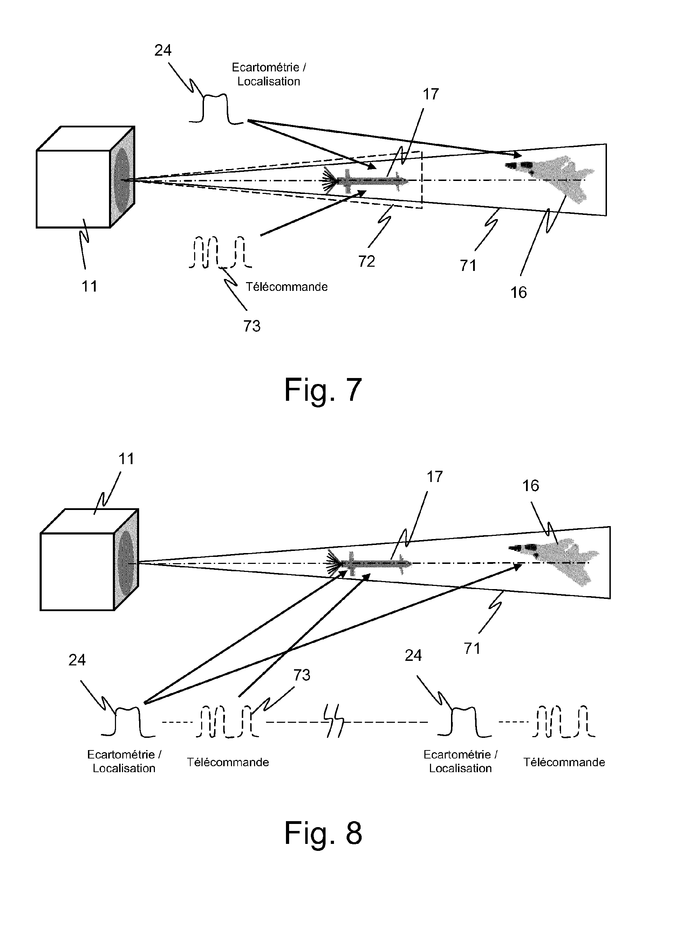

Dans une autre forme de réalisation, illustrée par la figure 7; la liaison montante est constituée par une source laser intégré à l'imageur dont le faisceau couvre le champ de l'imageur actif. Cette deuxième source laser a pour fonction de réaliser la liaison de télécommande 73 du vecteur 17 (liaison montante). Dans ce mode de réalisation, rendu possible dans la mesure où les divergences du faisceau laser d'illumination 71 de l'imageur actif et du faisceau laser de télécommande 72 sont proches ou identiques, l'optique de projection est avantageusement partagée. Cette forme de réalisation permet ainsi avantageusement de réduire le nombre de voies optiques nécessaires au guidage et assure, par construction, l'alignement des deux voies.

Dans une autre forme de réalisation encore, illustrée par la figure 8, variante de la forme de réalisation précédente, l'imageur laser 11 ne comporte qu'une seule source d'émission qui est utilisée à la fois pour réaliser l'émission du signal 24 servant à illuminer la zone imagée par le dispositif et pour réaliser l'émission des ordres de télécommande 81 nécessaires au guidage du vecteur. Les émissions servant à l'illumination 24 et celles servant à la télécommande 73 du vecteur 17 sont alors alternées dans le temps, comme l'illustre la figure.

Dans le cas où l'imageur 11 est équipé d'un émetteur laser agile en longueur d'onde, l'émission des ordres de télécommande 73 peut par ailleurs être réalisée sur une longueur d'onde différente.

Dans une autre forme de réalisation enfin, le dispositif selon l'invention peut comporter un imageur 11 comportant lui-même un émetteur laser configuré pour générer, sur commande, dans un but dissuasif, un faisceau laser dans une longueur d'onde visible de façon à provoquer un éblouissement ou à prévenir le pilote ou l'équipage d'un aéronef potentiellement hostile 16 (cible à intercepter potentielle) de l'imminence de l'envoi d'un vecteur d'interception 17 à sa rencontre.

Cette émission dans une longueur d'onde visible peut par exemple être obtenue soit en mettant en oeuvre un laser agile en longueur d'onde, soit en insérant un élément optique non linéaire (par exemple un cristal doubleur ou tripleur de fréquence) dans le faisceau de l'émetteur laser du dispositif.

Il est à noter que, quelle que soit la forme de réalisation considérée le dispositif selon l'invention est destiné à être couplé à un système de surveillance et d'interception dont il permet d'améliorer sensiblement (et à faible coût) la précision de localisation relative d'un vecteur d'interception 17 par rapport à une cible déclarée 16, qu'il doit intercepter de la manière la plus efficace possible, et le guidage du vecteur 17 sur cette cible 16. A ce titre, un système de surveillance et d'interception peut comporter un seul dispositif selon l'invention, colocalisé avec le senseur principal du système.

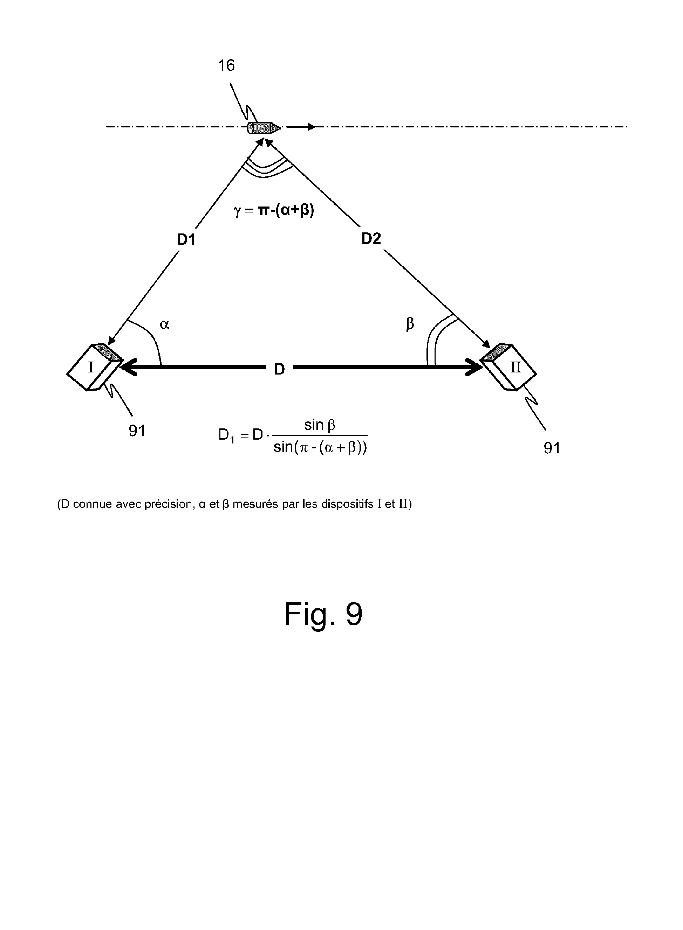

Alternativement il peut comporter, comme l'illustre la figure 9, plusieurs dispositifs selon l'invention 91 (deux dispositifs I et II sur la figure), espacés les uns des autres, un des dispositifs étant, par exemple colocalisé, avec le senseur principal du système. Une telle configuration est avantageusement adaptée aux cas où la précision de la mesure en distance doit être maximale, comme par exemple lorsque la cible à intercepter est constituée par un obus défilant devant le système, cible pour laquelle il y a nécessité que l'interception se traduise par l'impact du vecteur sur la cible. La précision de guidage à atteindre est alors à l'échelle du centimètre.

Dans un tel cas d'emploi, le dispositif selon l'invention est utilisé en plusieurs exemplaires (deux ou plus) occupant les uns par rapport aux autres des positions connues aussi précisément que possible. Les mesures angulaires (α et β) effectuées par les différents dispositifs, dont les positions relatives (distance D) sont connues avec précision, sont ici exploitées conjointement par le système de façon à déterminer précisément la distance de la cible par simple triangulation, comme illustré par la figure 9.

## Revendications

1. Dispositif de guidage différentiel par imagerie active laser pour guider un vecteur d'interception (17) vers une cible (16) comprenant un senseur principal (13, 15) couplé audit dispositif et des moyens de positionnement (15),
**caractérisé en ce que** le senseur principal (13-15) est apte à détecter et désigner la cible (16),
**en ce que** ledit dispositif étant mécaniquement couplé à des moyens de positionnement (15) permettant d'orienter son axe de visée en direction de la cible (16) dans deux axes, horizontal et vertical, et **en ce qu'**il comporte principalement un imageur actif laser (11) émettant un signal laser de localisation (24), associé à un écartomètre double (12) configuré pour permettre de localiser simultanément la cible (16) désignée et le vecteur d'interception (17) et pour déterminer l'écartométrie angulaire différentielle θ entre la direction correspondant à la cible (16) et la direction correspondant au vecteur d'interception (17).

2. Dispositif selon la revendication 1, **caractérisé en ce qu'**il comporte en outre un dispositif optique amplificateur, monté sur le vecteur d'interception (17) et configuré pour permettre d'amplifier l'écho laser (26) réfléchi par celui-ci.

3. Dispositif selon l'une des revendications 1 ou 2, **caractérisé en ce qu'**il comporte en outre un télémètre laser (51) permettant de déterminer les distances respectives de la cible (D_{cible}) et du vecteur d'interception (D_{vecteur}), la direction pointée par le télémètre étant déterminée par l'écartomètre double; les distances de la cible (16) et du vecteur d'interception (17) étant transmises à des moyens (22) chargés du guidage du vecteur d'interception vers la cible.

4. Dispositif selon l'une des revendications 1 ou 2, **caractérisé en ce que** l'imageur actif (11) est configuré de façon à réaliser, entre deux émissions consécutives (24), l'acquisition de plusieurs image successives décalées dans le temps, les instants d'acquisition et la durée de chaque acquisition permettant de définir des fenêtres d'acquisition espacées les unes des autres, l'intervalle de distance correspondant à une image donnée étant fonction de l'intervalle de temps séparant l'instant d'ouverture de la fenêtre temporelle durant laquelle l'image a été capturée de l'instant d'émission.

5. Dispositif selon la revendication 4, **caractérisé en ce que** l'écartomètre double (12) est configuré de façon à transmettre à des moyens (22) chargés du guidage du vecteur d'interception vers la cible à la fois l'écartométrie différentielle vecteur-cible et la distance correspondant à la fenêtre temporelle à partir de laquelle l'écartométrie différentielle transmise à été calculée.

6. Dispositif selon l'une quelconque des revendications 1 à 5, **caractérisé en ce qu'**il comporte en outre des moyens de guidage annexes configurés pour prendre en compte les informations de site, d'azimut et de distance de la cible (16) désignée, fournies par le système de détection (13-15), et réaliser le guidage du vecteur d'interception (17) sur la cible (16) durant la phase de vol pendant laquelle il est situé hors du champ de l'imageur (11).

7. Dispositif selon la revendication 6 configurés pour réalisé une interception multicibles, **caractérisé en ce qu'**il comporte plusieurs moyens de guidage annexes chacun étant configuré de façon à assurer le guidage d'un vecteur d'interception sur une cible donnée, le dispositif selon l'invention étant lui-même configuré pour être orienté successivement vers chacune des cibles désignées et mis en oeuvre de façon à assurer simplement le guidage final du vecteur correspondant sur la cible considérée.

8. Dispositif selon l'une quelconque des revendications précédentes, **caractérisé en ce qu'**il comporte en outre des moyens associés à l'imageur (11) permettant un guidage optique direct du vecteur d'interception par le dispositif.

9. Dispositif selon la revendication 8, **caractérisé en ce que** les moyens de guidage optique sont des moyens de télécommande (73) par faisceau laser qui comportent une source laser intégré à l'imageur actif (11), dont le faisceau couvre le champ de l'imageur actif et configurée de façon à ce que les divergences du faisceau laser d'illumination (71) de l'imageur actif (11) et du faisceau laser de télécommande (72) soient identiques ou proches.

10. Dispositif selon la revendication 8, **caractérisé en ce que**, l'imageur laser (11) ne comportant qu'une seule source d'émission, celle-ci est utilisée à la fois pour réaliser l'émission du signal (24) servant à illuminer la zone imagée par le dispositif et pour réaliser l'émission du faisceau de télécommande du vecteur d'interception, l'émission du signal d'illumination (24) et celle du signal de télécommande (73) étant alternées dans le temps.

11. Dispositif selon la revendication 10, **caractérisé en ce que**, l'imageur (11) étant équipé d'un émetteur laser agile en longueur d'onde, l'émission des ordres de télécommande (81) est réalisée sur une longueur d'onde différente de celle de l'émission du signal de localisation (24).
